Europäisches Patentamt

European Patent Office

Office européen des brevets

(11) Publication number: **0 325 092**
**A2**

(12) **EUROPEAN PATENT APPLICATION**

(21) Application number: 88830068.8

(51) Int. Cl.⁴: **F16L 37/28**

(22) Date of filing: 26.02.88

(30) Priority: 19.01.88 IT 1912088

(43) Date of publication of application:
26.07.89 Bulletin 89/30

(84) Designated Contracting States:
AT CH DE ES FR GB LI NL SE

(71) Applicant: FASTER S.r.l.
Via De Gasperi, 10
I-20066 Melzo Milano(IT)

(72) Inventor: Arosio, Massimo
Faster S.r.L Via De Gasperi, 10
I-20066 Melzo (Milano)(IT)

(74) Representative: Cicogna, Franco
Ufficio Internazionale Brevetti Dott.Prof.
Franco Cicogna Via Visconti di Modrone,
14/A
I-20122 Milano(IT)

(54) **Improved quick coupling adapted for application with the male element under pressure and allowing for a bidirectional unobstructed flow.**

(57) There is disclosed an improved quick coupling adapted for application with the coupling male element under pressure and allowing for a bidirectional unobstructed flow.

The quick coupling comprises a male component, under pressure,and a female component,which is slidingly inserted in a ring nut coaxial thereto and locked in a fixed position.

Both the coupling components are provided with a mushroom shaped gate or shutter element,biassed by a spring,and have a suitably shaped body at their inner and/or outer surfaces.

With the female component,moreover,an inner body,also biassed by a spring and encompassed on its inside and outside,by corresponding sliding elements and two ball ring cooperate,the balls being adapted for engaging in corresponding grooves formed on the coupling male component,on the ring nut and on the sliding element.

Fig.1

# IMPROVED QUICK COUPLING ADAPTED FOR APPLICATION WITH THE MALE ELEMENT UNDER PRESSURE AND ALLOWING FOR A BIDIRECTIONAL UNOBSTRUCTED FLOW

## BACKGROUND OF THE INVENTION

The present invention relates to an improved quick coupling adapted for application with the coupling male element under pressure and allowing for a bidirectional unobstructed flow.

As in known,a quick coupling is a fitting fixture which affords the possibility of switching on and off the mutual connection between two branches of a fluid circuit,without the need of carrying out complex additional operations.

## SUMMARY OF THE INVENTION

The task of the present invention is to provide an improved quick coupling able of assuring a stable connection between the parts forming said coupling.

Within the scope of the above mentioned task, a main object of the present invention is to provide an improved quick coupling which is very reliable in operation.

Another object of the present invention is to provide an improved quick coupling the component parts of which are adapted to be stably connected to one another,by means of a mechanical type of interlocking and in a simple and very quick way.

Another object of the present invention is to provide an improved quick coupling the component parts of which can be simply and quickly interlocked by means of a rear ball ring held in its position by two inner and outer slider members.

According to one aspect of the present invention, the above mentioned task and objects,as well as yet other objects,which will become more apparent hereinafter, are achieved by an improved quick coupling,characterized in that it comprises a pressurized male component and a female component,slidingly inserted in a ring nut coaxial thereto and locked in a fixed position,both said components being provided with a mushroom gate or shutter element, biassed by a spring,and have a shaped body at their inner and/or outer surface,with said female component or element an inner body,also biassed by a spring and encompassed in its outside and inside by corresponding sliding elements and two balls rings cooperating,said balls being adapted for engaging in corresponding grooves formed,at suitable positions,on the female component or element,on said ring nut and said sliding elements.

## BRIEF DESCRIPTION OF THE DRAWINGS

Further characteristics and advantages of the improved quick coupling according to the present invention will become more apparent hereinafter from the following detailed description of a preferred embodiment of the coupling,which is illustrated by way of a merely indicative but not limitative example in the figures of the accompaying drawings,where:

figure 1 is a partial cross-sectional view illustrating the two male and female components or elements of the coupling according to the invention,in their disengaged condition; and

figure 2 to 8 illustrate by a schematic sequence the steps for coupling the two mentioned male and female elements of the quick coupling according to the present invention.

## DESCRIPTION OF THE PREFERRED EMBODIMENTS

With reference to the figures of the accompanying drawings,the improved quick coupling according to the present invention comprises a male element,indicated overally at the reference number 1,and a female element,indicated overally at the reference number 2,provided with a perimetrical ring nut 3 which is coaxial therewith.

The male element or component 1 is provided with a substantially mushroom shaped gate or shutter ele ment 4,biassed by a spring 5 and is provided with a circumferential slot or groove 6 which,on a side,is restrained by a front abutment 7.The mentioned ring nut, in turn,is provided,at the front portion whereof,by two inner grooves 8 and 8' and,at an intermediate position, with an elongated inner seat 9 housing a spring 10 which is restrained in a corresponding seat 11 circumferentially formed with respect to an inner body 12.

In the annular chamber defined,laterally,by the mentioned ring nut and inner body and,at the rear,by a tubular abutment member 13,there is moreover provided a sliding element or slider 14 which is coaxial with said inner body.

This slider is biassed by a spring 15 and is provided with an inner groove 16 having a half-round cross-section.

The mentioned inner body 12 which is screw engaged,at 17,with the tubular element 13 is provided with two front abutments,indicated respectively at 18 and 19,the outermost of which is provided with a tightness annular gasket.

That same inner body 12,moreover,is provided with two other annular gaskets 20 and 21 which are able of pressing,in a tight way,on an inner slider 22,and with two ball rings 23 and 24,which are suitably located and arranged.

The mentioned inner slider 22 forms an integrating portion of the valve assembly of the female element and defines a stop abutment for a mushroom shaped structure 25 provided for counterbiassing,by means of a spring 26,a gate element 27,also of substantially mushroom shape.

In this connection it should be pointed out that one of the main characteristics of the quick coupling according to the present invention is that of comprising the inner slider 22 biassed by a spring 29,and adapted for sliding in the inner body 12;a ball ring 24;an outer slider 14 adapted for sliding outside of the inner body 12 and biassed by the spring 15.

The gate element 27,as well as the gate element 4 of the male element are provided with an annular tightness gasket 28.

It should moreover be pointed out that also the inner slider 25 is biassed by a spring and that the ring nut 3 is provided with two circumferential slots or grooves 30 for restraining it onto a panel 31 by means of corresponding locking rings 32.

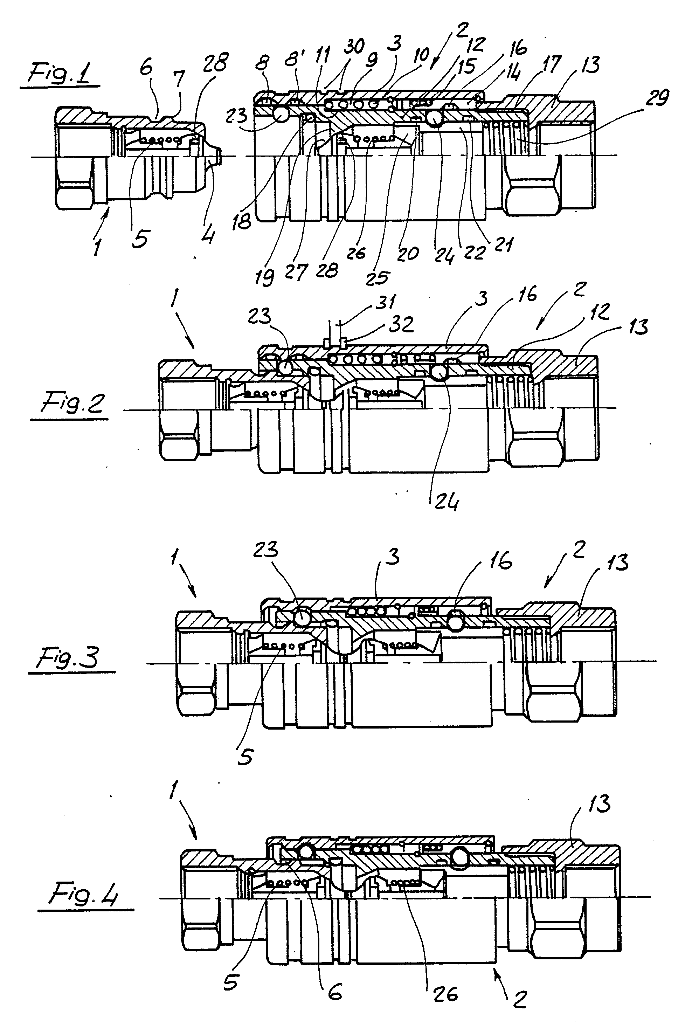

Figure 2 shows the starting step for assembling the quick coupling according to the present invention,in which the male element is firstly inserted into the female element 2.

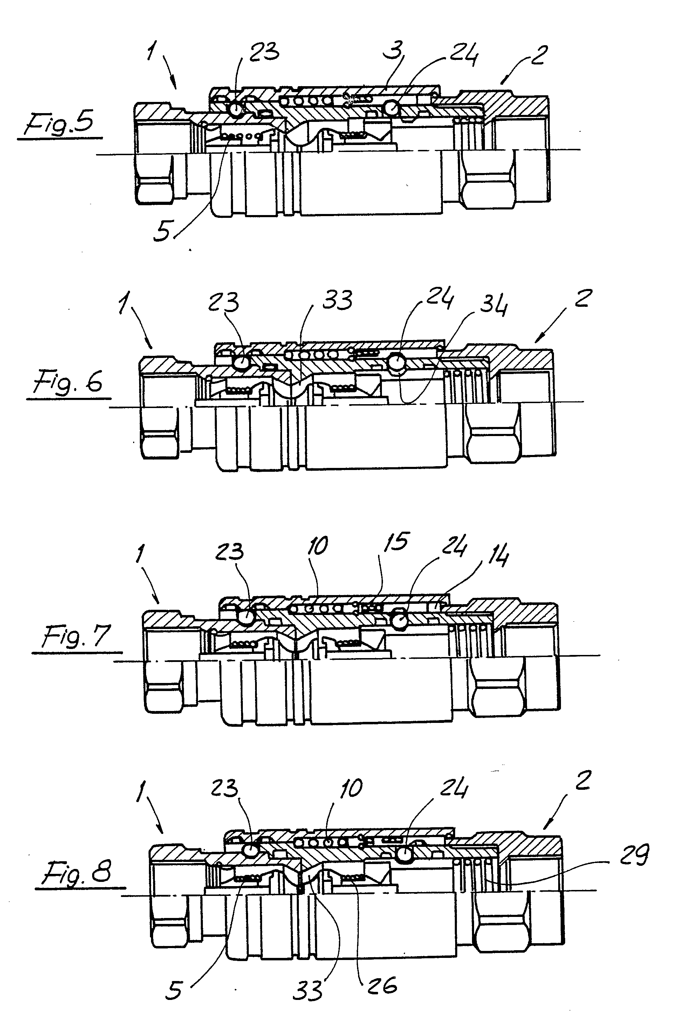

Figure 3 shows the male element progressively pushing the inner body 12 of the female element so as to cause (as shown in figure 4) the ball ring 23 to enter the groove 8' of the ring nut.

The insertion of the male element is continued as far as said male element abuts against the abutment 19 of the mentioned inner body;during this movement,the spring 10 of the ring nut 3 will be compressed.As the male component abuts against said inner body 12 (see figure 5), the ring of balls 23 may enter the groove 6 of said male element,whereas the ring nut spring will push to its home position the inner body associated with said female element.

At this time,by increasing the pressure of the fluid in the female element,so as to balance the residual pressure of the fluid in the male element,the spring 29 of the inner slider 22 will push the related gate or shutter element 27 against the gate or shutter element 4 of the male element,thereby overcoming the force of the spring 5 and opening,perimetrically of both said gate elements (see figure 6),a perimentrical port so as to allow for the fluid to pass through.

The ball ring 24,as shown in figure 7, will enter the groove 34 of the slider 22,thereby disengaging the outer slider 14 which,pushed by the spring 15,will restrain the balls in said groove (as shown in figure 8),thereby operatively locking the overall assembly.

The two elements or components of the quick coupling according to the present invention may be simply carried out by pulling out the male element which,in this way,will disengage from the mentioned front ring of balls 23.

From the above disclosure and from the figures of the accompanying drawings it should be apparent that the quick coupling according to the present invention fully achieves the intended task and objects.

While the quick coupling or the invention has been disclosed and illustrated with reference to a preferred embodiment thereof,it should be apparent that the disclosed embodiment is susceptible to many modifications and variations,all of which will come within the spirit and scope of the invention,as defined in the appended claims.

## Claims

1- An improved quick coupling,characterized in that it comprises a pressurized male element and a female element,slidingly inserted in a ring nut coaxial thereto and locked in a fixed position,both said elements being provided with a mushroom gate or shutter element, biassed by a spring,and have a shaped body at their inner and/or outer surface,with said female element an inner body,also biassed by a spring and encompassed in its outside and inside by corresponding sliding elements and two balls rings cooperating,said balls being adapted for engaging in corresponding grooves formed,at suitable positions,on the female element,on said ring nut and on said sliding elements.

2- An improved quick coupling according to the preceding claim,characterized in that it comprises an inner slider (22) counterbiassed by a spring (29),and adapted for sliding in said inner body (12);a ball ring (24); an outer slider (14) adapted for sliding outside or said inner body (12) and counterbiassed by a respective spring (15).

3. An improved quick coupling according to the preceding claims,characterized in that said male element (1) is provided with a substantially mushroom shaped gate or shutter element (4)-

,counterbiassed by a spring (5) and is provided with a circumferential groove (6) restrained,on a side,by a front abutment (7).

4- An improved quick coupling according to one or more of the preceding claims,characterized in that said ring nut (3) is provided,at the front portion thereof, with two inner grooves (8,8′) and,at an intermediate position,with an elongated inner seat (9) for holding a spring (10) restrained in a corresponding seat (11) circumferentially formed on said inner body (12).

5- An improved quick coupling,according to one or more of the preceding claims,characterized in that said inner body (12) and ring nut (3) define,laterally.an annular chamber restrained,at the rear,by by an abutment tubular element (13),in said annular chamber there being arranged a slider (14) coaxial with said inner body (12),said slider (14) being counterbiassed by a spring (15) and being provided with an inner groove (16) having a half-round cross-section.

6- An improved quick coupling according to one or more of the preceding claims,characterized in that said inner body (12) which is screw coupled to said tubular element (13) is provided with two front abutments (18,19) the outermost of which is provided with an annular tightness gasket,said inner body being moreover provided with two annular gaskets (20,21) adapted for tight pressing on an inner slider (22) and with two ball rings (23,24).

7- An improved quick coupling according to one or more of the preceding claims,characterized in that said inner slider (22) forms an integrating parts of the valve assembly of the coupling female element (2) and defines a stop abutment for a mushroom shaped structure (25) biassing,through a spring (26),a substantially mushroom shaped gate or shutter element (27),said substantially mushroom shaped gate or shutter element (27) and the gate or shutter element (4) of said male element (1) being provided with tightness annular gaskets.

Fig.1

Fig.2

Fig.3

Fig.4

EP 0 325 092 A2

Fig.5

Fig. 6

Fig. 7

Fig. 8